# EUROPEAN PATENT APPLICATION

(11) **EP 3 223 172 A1**
(43) Date of publication of application: **27.09.2017**
(21) Application number: 16305304.4
(22) Date of filing: 21.03.2016
(51) Int. Cl.: G06F 17/30, G06F 15/173

(54) **METHOD AND SYSTEM FOR PARALLEL QUERY USING BITMASK MULTICAST**

(71) Applicant: ALCATEL LUCENT, 92100 Boulogne-Billancourt (FR)
(72) Inventor: SARKAR, Souradip, 2018 Antwerpen (BE); GOMONY, Manil Dev, 2018 Antwerpen (BE); DE LIND VAN WIJNGAARDEN, Adriaan, Murray Hill, NJ 07974-0636 (US); SUVAKOVIC, Dusan, Murray Hill, NJ 07974-0636 (US)
(74) Representative: ALU Antw Patent Attorneys

(57) **Abstract**

Embodiments relate to a search device (1) for executing a multidimensional search query on a database including a plurality of multidimensional data elements, a multidimensional data element being specified by an identifier and a plurality of fields, said device comprising at least one search controller (2) and a plurality of memory units (3) interconnected by a network (4) comprising a plurality of networking nodes (5),
wherein the search controller (2) is configured for sending a multicast search packet (11) on the network (4), wherein the multicast search packet (11) specifies a plurality of destination memory units and at least one search criteria.

## Description

### FIELD OF THE INVENTION

The present invention relates to the field of data processing. In particular, the present invention relates to methods and devices for executing multidimensional search operations.

### BACKGROUND

Memory lookup and search operations are being performed in a wide range of communication and computer systems to support a wide variety of applications, including big data applications, search engines for packet processing, software defined networks (SDN), deep packet inspection and anomaly detection.

Modern "memory lookup engines" can broadly be classified into either software based, hardware based or hybrid. A software-based solution typically relies on a general-purpose processor having a hierarchical memory architecture (i.e. caches) and therefore suffers from longer latencies for a look-up operation because of the multi-level memory hierarchy. Known hardware and hybrid solutions results in a larger area usage and power consumption, for e.g. look-up using Ternary Content Addressable Memory (TCAM). Also, existing approaches are not scalable in terms of area and power consumption for future memory lookup requirements.

### SUMMARY

It is thus an object of embodiments of the present invention to propose a method and a device for multidimensional search operations, which do not show the inherent shortcomings of the prior art.

Accordingly, embodiments relate to a device for executing a multidimensional search query on a database including a plurality of multidimensional data elements, a multidimensional data element being specified by an identifier and a plurality of fields, said device comprising at least one search controller and a plurality of memory units interconnected by a network comprising a plurality of networking nodes,
wherein the search controller is configured for sending a multicast search packet on the network, wherein the multicast search packet specifies a plurality of destination memory units and at least one search criteria,
wherein a memory unit is configured for:
- storing a portion of said database, said portion specifying at least the identifier and one field of multidimensional data elements,
- in response to a multicast search packet from the search controller, determining a set of identifiers in function of the stored portion of the database and the at least one search criteria of the multicast search packet, and
- sending a response packet to the search controller, specifying the determined set of identifiers,
wherein the search controller is configured for:
- receiving response packets from respective memory units, and
- determining a search query result in function of the sets of identifiers of the received response packets,
wherein the networking nodes are configured for forwarding the multicast search packet to the specified destination memory units and for forwarding the response packets to the search controller.

Correspondingly, embodiments relate to a method for executing a multidimensional search query on a database including a plurality of multidimensional data elements, a multidimensional data element being specified by an identifier and a plurality of fields, comprising:
- storing portions of said database in respective memory units, a portion specifying at least the identifier and one field of multidimensional data elements,
- sending, from a search controller, a multicast search packet on a network interconnecting the search controller and the memory units, wherein the multicast search packet specifies a plurality of destination memory units and at least one search criteria, the network comprising a plurality of networking nodes,
- in response the multicast search packet, determining, at the destination memory units, respective sets of identifiers in function of the stored portion of the database and the at least one search criteria of the multicast search packet,
- sending, from the destination memory units to the search controller, respective response packets specifying the determined set of identifiers,
- determining, at the search controller, a search query result in function of the sets of identifiers of the received response packets.

The network may comprise a plurality of networking links connecting the networking nodes with a mesh, or folded Torus topology.

In some embodiments, the device comprises a integrated circuit, wherein multiple memory units and at least two networking nodes are included in the integrated circuit.

The plurality of memory units may include a first memory unit based on a first memory technology and a second memory unit based on a second memory technology different from the first memory technology.

The search controller may be configured for determining the search query result by selecting identifiers included in each of the sets of identifiers of the received response packets, and/or based on priorities.

In some embodiments, the multicast search packet comprises a SourceID field specifying an address of the search controller, a DestinationID field specifying said plurality of destination memory units, and a search payload specifying said at least one search criteria, and wherein the DestinationID field comprises n bits associated with respective memory units, wherein n is the number of memory units in the device, and wherein the value of a bit specifies whether the corresponding memory unit is a destination of the search packet or not.

The networking nodes may be configured for forwarding packets at least along a predefined logical path of successive networking nodes.

Determining, at the destination memory units, respective sets of identifiers may occur at least partially in parallel for at least two memory units.

Embodiments also relate to a networking device comprising a packet classifier, wherein the packet classifier comprises a device as described above, wherein the multidimensional data elements are packet classifying rules.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a search device for executing a multidimensional search query,
Figure 2 is a database table stored by the search device of Figure 1,
Figure 3 is a diagram of message formats used in the search device of Figure 1,
Figure 4 is a block diagram of a networking device, and
Figures 5 and 6 are tables used in the networking device of Figure 4.

### DESCRIPTION OF EMBODIMENTS

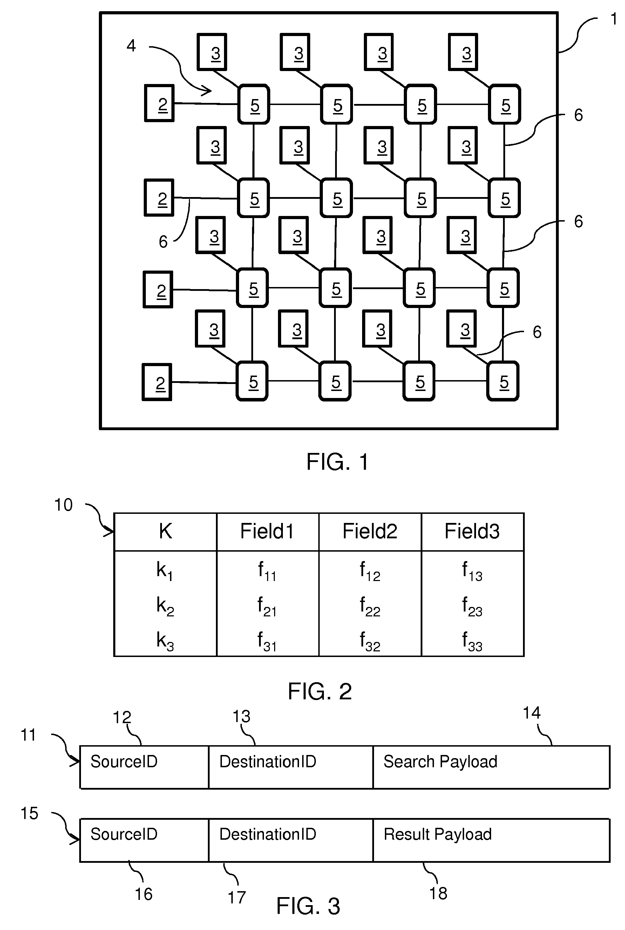

**Figure 1** is a block diagram of a search device 1 for executing a multidimensional search query on a database. The search device 1 comprises one or more search controllers 2, a plurality of memory units 3 and a network 4 interconnecting the search controllers 2 and the memory units 3. The network 4 comprises networking nodes 5 connected by networking links 6. In the illustrated example, the search device 1 comprises four search controllers 2, sixteen memory units 3 and sixteen networking nodes 5, but this architecture can arbitrarily be scaled up depending on the application requirements.

The search device 1 may comprise one or more integrated circuits, or chips, including at least some of the search controllers 2, memory units 3, networking nodes 5 and/or networking links 6. In other words, the search device 1 may use Network-on-Chip technology (NoC). The search device 1 may be implemented for example based on FPGA or ASIC technologies.

The search device 1 stores a database including a plurality of multidimensional data elements. In this context, a multidimensional data element is a data element specified by an identifier and a plurality of fields. Accordingly, the database may be represented for example as a table 10, as illustrated on **Figure 2****.** The table 10 has a plurality of columns: one column corresponding to the identifiers and other columns corresponding to the respective fields. The multidimensional data elements correspond to respective lines of the table 10. In the example of Figure 2, the table 10 comprises a first column of identifiers (which may also be referred to as "keys") denoted K, and three columns of fields denoted Field1, Field2 and Field3. Three multidimensional data elements are illustrated, for example a first data element having identifier k₁ and data f₁₁, f₁₂ and f₁₃ in the respective fields Field1, Field2 and Field3. Of course, the table 10 may include more fields and/or more multidimensional data elements. A field of a multidimensional data element may include for example a specific value, a range, a formal expression specifying a plurality of values...

In the search device 1, the database is stored in a distributed manner by the memory units 3. The partitioning of the database may relate to the fields and/or to the multidimensional data elements. For example, for some of the multidimensional data elements, a first memory unit 3 stores the identifier and one or more fields, and at least one second memory unit 3 stores the identifier and one or more other fields. Also, for a given field, a first memory unit 3 may store some (partial) multidimensional elements and at least one second memory unit 3 may store other (partial) multidimensional elements. "Partial multidimensional element" means that the memory unit 3 stores the identifier and some of, but not all, fields of a multidimensional element. In an example wherein the fields relate to respective layers of a protocol stack (such as TCP/IP), then the fields belonging to the same layer can be grouped in the same memory unit 3.

The network 4 allows a packet-based communication between the search controllers 2 and the memory units 3. A networking protocol specifies a packet format. For example, a packet may include a header and a payload. The header includes a SourcelD field specifying the sender of the packet, and a DestinationID field specifying the destination(s) of the packet. The network 4 supports multicast and/or broadcast communication. Accordingly, the DestinationID field may specify a unique destination or a plurality of destinations. The payload includes the content of a message exchanged on the network 4.

The networking nodes 5 are physically connected by the networking links 6, for example with a mesh or folded Torus topology. Moreover, a logical path, forming for example a ring-based logical topology, specifies a succession of networking nodes 5. The networking nodes 5 function as switches and forward packets in the network 4, in function of the DestinationID. For example, when a networking node 5 receives a packet P with destination Dest in the DestinationID field:
- If Dest is a unique destination, which is directly connected to the networking node 5, the packet P is forwarded to the specified unique destination,
- If Dest is a unique destination, which is not directly connected to the networking node 5, the packet P is forwarded to the next networking node 5, as specified by the logical path,
- If Dest specifies multiple destinations (multicast), including one which is directly connected to the networking node 5, the packet P is forwarded both to that destination and to the next networking node 5 specified by the logical path, and
- If Dest specifies multiple destinations, not including one which is directly connected to the networking node 5, the packet P is forwarded to the next networking node 5 specified by the logical path.

A memory unit 3 comprises for example a memory controller, a memory and a communication interface. The memory stores data and may be based on a memory technology such as SRAM, DRAM, TCAM... The communication interface allows receiving messages from the search controllers 2 and sending messages to the search controllers 2, through the network 4. The memory controller is configured for executing a search query included in a received message and sending a response including the query result. For example, the memory controller comprises a programmable query engine which accesses the memory. The memory controller is also configured for read/write operations on the memory.

The search device 1 may present a heterogeneous memory architecture, wherein different memory units 3 include memory based on different technologies and/or use different query techniques in the memory controller, or a homogeneous memory architecture, wherein different memory units 3 include memory based on the same technology.

In the example of Figure 1, the memory units 3 are directly connected to respective networking nodes 5.

A search controller 2 is configured for executing a multidimensional search query in the database or "search table", by communicating with the memory units 3 through the network 4. A multidimensional search query is a search query specified by a plurality of search criteria associated with respective fields. A search criteria may for example specify a specific value, a range, a formal expression specifying a plurality of values... An example of multidimensional search query is: Search for multidimensional data element(s) having: a match between value v₁ and the content of Field1, a match between range r1 and the content of Field2, and any entry in Field3 (that is, three search criteria). The result of such multidimensional search query includes a list of identifiers of the multidimensional data element satisfying the search criteria.

The functioning of the search device 1 is as follows:
- As explained before, the database is distributed in the plurality of memory units 3. Accordingly, to execute a search query, the search controller 2 generates a multicast search packet 11 and sends it on the network 4. The format of the multicast search packet 11 is illustrated on **Figure 3****.** The SourceID field 12 specifies an address of the search controller 2. The DestinationID field 13 specifies a plurality of destination memory units 3. The Search Payload field 14 comprises at least one search criteria. An example format for the DestinationID field is n bits associated with respective memory units 3, wherein n is the number of memory units 3 in the search device 1, and wherein the value of a bit specifies whether the corresponding memory unit 3 is a destination of the search packet 11 or not (for example "1" for yes and "0" for no). When generating the search packet 11, the search controller 2 may determine the plurality of memory units 3 specified by DestinationID field 13 in function of the search criteria and partitioning data which specify how the database is distributed in the memory units 3. For example, if the search criteria relate to Field1 and Field2 of the database, but not to Field3, the search controller 2 selects the memory units 3 which stores Field1 and Field2 for some multidimensional data elements. The partitioning data may specify a predetermined partitioning known to the search controller 2, or be determined by the search controller 2 by a learning process. For example, the search controller 2 may initially send search packets 11 to memory units 3 without knowing whether they store the fields associated with the search criteria, and refine the partitioning data based on which memory unit 3 actually sends a relevant response.
- The networking nodes 5 forwards the multicast search packet 11 to the memory units 3 specified by the DestinationID field 13. More specifically, the multicast search packet 11 is forwarded from one networking node 5 to the next, following a predetermined logical path of successive networking nodes 5, and to the memory units 3 specified by the Destination ID field 13, but not to the memory units 3 not specified by the Destination ID field 13. This may be described as "Logical multicast/physical unicast" strategy.
- In response to receiving the multicast search packet 11, a memory unit 3 searches, in its memory, the multidimensional data elements which match the search criteria included in the Search Payload. Since the memory does not include all fields, a partial multidimensional data element stored in the memory may not satisfy all the search criteria, although the full multidimensional element, stored in a distributed manner by various memory units 3, satisfies the search query. Accordingly, in a memory unit 3, a match is determined by the memory controller when at least one search criteria is satisfied and when no search criteria is infringed. Then, the memory unit 3 generates and sends to the search controller 2 a response packet 15. The format of the response packet 15 is shown on Figure 3. The response packet 15 includes the address of the memory unit 3 in the SourceID field 16, the address of the search controller 2 in the DestinationID field 17, and a list of multidimensional data element identifiers in the Result payload 18. The other memory units 3 which received the multicast search packet 11 proceed similarly. The processing by the respective memory units 3 may occur, at least partially, in parallel.
- Accordingly, the search controller 2 receives Response packets 15 from respective memory units 3, and determines a search result in function of the sets of identifiers of the received response packets 15. For example, the search controller 2 determines as search result one identifier or a list of identifiers which is (are) included in all the response packets 15. The search controller 2 may apply other selection rules, for example selecting one identifier in function of priorities in case more than one identifier are included in all the response packets 15.

In the search device 1, a multicast search packet 11 is sent to a plurality of memory units 3, storing respective parts of the database. Accordingly, the search device 1 allows simultaneous accesses to the data residing in the distributed database in the different fields. This improve the response time. Also, by adapting the number of memory units 3 and networking nodes 5, the search device 1 can be scaled to the requirement of various applications and provide a massive amount of simultaneous accesses to the database. Moreover, the networking nodes 5 forward the multicast search packet 11 along a predetermined logical path of successive networking nodes 5 and to the specified memory units 3, but not to all the memory units 3, according to the "logical multicast/physical unicast" strategy described above. The notion of employing physically unicast yet logically multicast strategy, reduces power consumption at the architectural level. For example, certain fields are more likely to be searched compared to others, and only certain memory units 3 need to search the query.. Contrary to a TCAM, which dissipates a huge amount of power because of the brute force matching across the entire memory matrix, this approach enables saving power on average-case, without incurring much latency penalty.

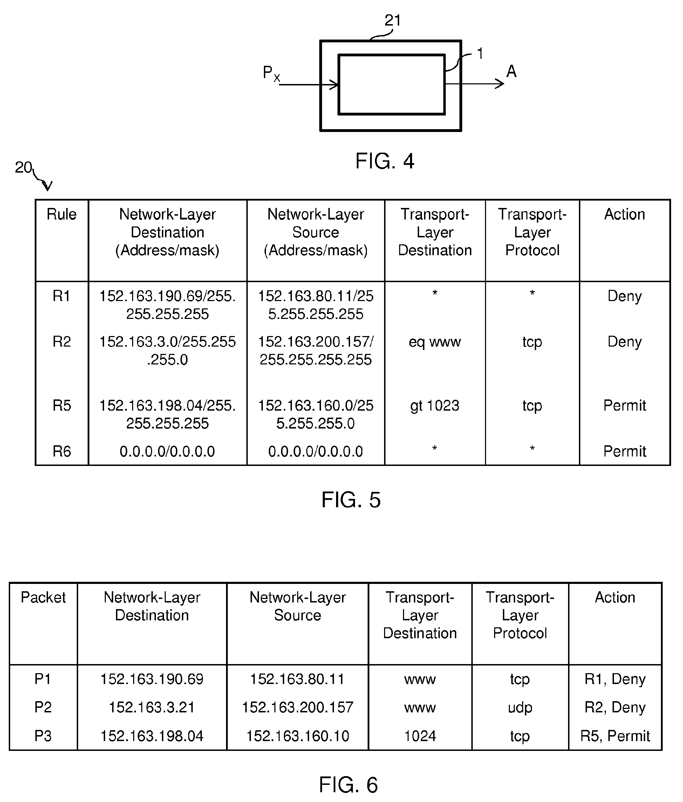

In one example, the search device 1 is part of a packet classifier of a networking device 21. **Figure 4** is a block diagram of the networking device 21, which is for example a router. Here, it should be noted that networking terminology is used at two different levels: A first level relates to the internal architecture of the search device 1: network 4, networking nodes 5, networking links 6, multicast search packet 11, response packet 15... A second level relates to the network of which the networking device 21 is an element. This may be for example IP-based local area network, an IP core of a service provider network...

When the networking device 21 receives a packet Pₓ, the packet classifier which includes the search device 1 determines the action A to be taken with respect to the packet P_{X}, in function of packet classifying rules and of the content of the packet P_{X}. **Figure 5** shows a table 20 which include example packet classifying rules. Rules are stored in respective lines of the table 20. The table 20 include a first column "Rule" which stores rule identifiers, other columns which stores various fields relating to the structure of a packet P_{X} (such as for example Network Layer Destination (address and mask), protocols...), and a column which stores the action field A specified by the rules. For example, the first line of table 20 stores a rule R1 which specifies that for a packet Pₓ with Network-Layer destination (address and mask) 152.163.190.69/255.255.255.255, Network-Layer source (address and mask) 152.163.80.1/255.255.255.255, any Transport-Layer destination and protocol, the action A is "Deny".

The table 20 may be regarded as a specific example of the table 10 of Figure 2, and is stored in the search device 1 as a distributed database. The responses sent by the individual memory units 3 includes rule identifiers and associated actions (for that rule). For example, a first and a second memory units 3 store the columns "Rule", "Network-Layer destination" and "Network-Layer source", a third and a fourth memory units 3 store columns "Rule", "Transport-Layer destination" and "Transport-Layer protocol", and other memory units 3 stores the column "Rule" and the column "Action" and/or other non-illustrated columns, for example relating to MAC-Layer, Application-Layer...

In the search device 1, the search controller 2 generates a multicast search packet 11 in function of the content of a packet P_{X}. For example, the search controller 2 parses the packet P_{X} to select the Network-Layer destination, Network-Layer source, Transport-Layer destination and Transport-Layer protocol, and includes those in the search payload 14 as search criteria. The search controller 2 also selects memory units 3 which are known to include the relevant fields (for example based on a predetermined partition of the database and/or on previously received responses) to determine the DestinationID field 13. The search controller 2 then sends the generated multicast search packet 11 to the selected memory units 3.

In response to receiving the multicast search packet 11, a memory unit 3 checks whether one of the search criteria of the search payload relates to the field(s) that it stores. In the affirmative, the memory unit 3 determines the rules which satisfy the search criteria and sends a response packet 15 including the corresponding rule identifiers and, in the case of a memory unit 3 storing the column "Action", the corresponding actions.

The search controller 2 then receives a plurality of response packets 15, including respective sets of rules identifiers, and determines the rules that should be applied and the corresponding action. For example, the search controller 2 selects the rules included in all the response packets 15. In case more than one rule identifiers are included in all the response packets 15, the search controller 2 may selects one of them, for example based on predefined priorities.

**Figure 6** shows a table 30 including, for packets P₁, P₂ and P₃, the relevant fields of the packets (Network-Layer destination, Network-Layer source, Transport-Layer destination and Transport-Layer protocol) and the rule and action determined by the search device 1. For example, packet P₁ has the Network-Layer destination address 152.163.190.69, the Network-Layer source 152.163.80.1, the Transport-Layer destination "www" and the Transport-Layer protocol "tcp". Consider that a first memory unit 3 stores the Network-Layer destination and Network-Layer source fields of table 20 for rules R1, R2, R5 and R6, and a second memory unit 3 stores the Transport-Layer destination and Transport-Layer protocol fields of table 20 for the same rules. Based on the match between the packet P₁ and the respective stored parts of the database, the first memory unit 3 will send a response packet 15 including rule identifier R1, and the second memory unit 3 will send a response packet 15 including rule identifiers R1 and R6. In function of the received sets of rule identifiers (R1) and (R1, R6), the search controller 2 determines R1 as the search result and "Deny" as the corresponding action A.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Device (1) for executing a multidimensional search query on a database including a plurality of multidimensional data elements, a multidimensional data element being specified by an identifier and a plurality of fields, said device comprising at least one search controller (2) and a plurality of memory units (3) interconnected by a network (4) comprising a plurality of networking nodes (5), wherein the search controller (2) is configured for sending a multicast search packet (11) on the network (4), wherein the multicast search packet (11) specifies a plurality of destination memory units and at least one search criteria,
wherein a memory unit (3) is configured for:
- storing a portion of said database, said portion specifying at least the identifier and one field of multidimensional data elements,
- in response to a multicast search packet (11) from the search controller (2), determining a set of identifiers in function of the stored portion of the database and the at least one search criteria of the multicast search packet, and
- sending a response packet (15) to the search controller, specifying the determined set of identifiers,
wherein the search controller (2) is configured for:
- receiving response packets (15) from respective memory units (3), and
- determining a search query result in function of the sets of identifiers of the received response packets,
wherein the networking nodes (4) are configured for forwarding the multicast search packet (11) to the specified destination memory units and for forwarding the response packets (15) to the search controller (2).

2. Device according to claim 1, wherein the network (4) comprises a plurality of networking links (6) connecting the networking nodes (5) with a mesh, or folded Torus topology.

3. Device according to claim 1 or 2, comprising a integrated circuit, wherein multiple memory units (3) and at least two networking nodes (5) are included in the integrated circuit.

4. Device according one of claims 1 to 3, wherein the plurality of memory units (3) include a first memory unit based on a first memory technology and a second memory unit based on a second memory technology different from the first memory technology.

5. Device according to one of claims 1 to 4, wherein the search controller (2) is configured for determining the search query result by selecting identifiers included in each of the sets of identifiers of the received response packets, and/or based on priorities.

6. Device according to one of claims 1 to 5, wherein the multicast search packet (11) comprises a SourceID field (12) specifying an address of the search controller (2), a DestinationID field (13) specifying said plurality of destination memory units, and a search payload (14) specifying said at least one search criteria, and wherein the DestinationID field comprises n bits associated with respective memory units (3), wherein n is the number of memory units (3) in the device (1), and wherein the value of a bit specifies whether the corresponding memory unit is a destination of the search packet or not.

7. Device according to one of claims 1 to 6, wherein the networking nodes are configured for forwarding packets at least along a predefined logical path of successive networking nodes.

8. A networking device (21) comprising a packet classifier, wherein the packet classifier comprises a device (1) according to one of claims 1 to 7, wherein the multidimensional data elements are packet classifying rules.

9. Method for executing a multidimensional search query on a database including a plurality of multidimensional data elements, a multidimensional data element being specified by an identifier and a plurality of fields, comprising:
- storing portions of said database in respective memory units (3), a portion specifying at least the identifier and one field of multidimensional data elements,
- sending, from a search controller (2), a multicast search packet (11) on a network (4) interconnecting the search controller (2) and the memory units (3), wherein the multicast search packet (11) specifies a plurality of destination memory units and at least one search criteria, the network comprising a plurality of networking nodes (5),
- in response the multicast search packet, determining, at the destination memory units, respective sets of identifiers in function of the stored portion of the database and the at least one search criteria of the multicast search packet,
- sending, from the destination memory units to the search controller, respective response packets (15) specifying the determined set of identifiers,
- determining, at the search controller, a search query result in function of the sets of identifiers of the received response packets.

10. Method according to claim 9, wherein determining, at the destination memory units, respective sets of identifiers occurs at least partially in parallel for at least two memory units.
